(19) Europäisches Patentamt
European Patent Office
Office européen des brevets

(11) EP 1 167 450 A1

(12) **EUROPEAN PATENT APPLICATION**
published in accordance with Art. 158(3) EPC

(43) Date of publication:
**02.01.2002 Bulletin 2002/01**

(21) Application number: **01901384.6**

(22) Date of filing: **17.01.2001**

(51) Int Cl.[7]: **C08L 69/00**

(86) International application number:
**PCT/JP01/00258**

(87) International publication number:
**WO 01/57136 (09.08.2001 Gazette 2001/32)**

(84) Designated Contracting States:
**AT BE CH CY DE DK ES FI FR GB GR IE IT LI LU MC NL PT SE**

(30) Priority: **01.02.2000 JP 2000023932**

(71) Applicant: **IDEMITSU PETROCHEMICAL CO., LTD.**
**Tokyo 130-0015 (JP)**

(72) Inventors:
- **OKAMOTO, Masaya**
  **Ichihara-shi, Chiba 299-0205 (JP)**
- **TOMIOKA, Tatsuya**
  **Ichihara-shi, Chiba 299-0205 (JP)**

(74) Representative:
**Gille Hrabal Struck Neidlein Prop Roos**
**Patentanwälte Brucknerstrasse 20**
**40593 Düsseldorf (DE)**

# (54) POLYCARBONATE RESIN COMPOSITION

(57) A polycarbonate resin composition in which their flowability is improved without deteriorating their impact resistance is disclosed.

The polycarbonate resin composition comprises (i) 100 parts by mass of a polycarbonate resin formed of 10 to 100 percent by mass of (A) an aromatic polycarbonate having an end group indicated by a formula (1) shown below,

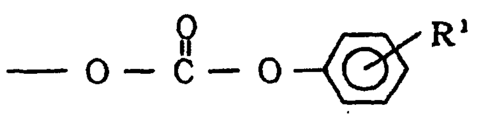

... (1)

(wherein $R^1$ is an alkyl group having 10 to 35 carbon atoms),
and 0 to 90 percent by mass of (B) an aromatic polycarbonate having an end group indicated by a formula (2) shown below,

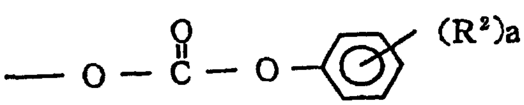

... (2)

(wherein $R^2$ is an alkyl group having 1 to 9 carbon atoms, an aryl group having 6 to 20 carbon atoms or a halogen atom, and a is an integer of 0 to 5); and
(ii) 5 to 150 parts by mass of (C) an inorganic filler.

EP 1 167 450 A1

## Description

### TECHNICAL FIELD

The present invention relates to polycarbonate resin compositions, and specifically relates to polycarbonate resin compositions which are excellent in flowability and impact resistance and injection-molded products made of which have excellent gloss.

### BACKGROUND OF THE INVENTION

Polycarbonate resins are excellent in mechanical strength (especially, impact resistance), thermal resistance, electrical properties and the like, and have thus been widely used as engineering plastics in various fields, such as the electric and electronic appliances field and the automobile field. There have been known glass fiber-reinforced polycarbonate resins in which glass fiber is incorporated as an inorganic filler in order to improve rigidity and dimensional stability of the polycarbonate resins. In recent years, there have been risen uses for molded products with thin walls which are made using glass fiber-reinforced polycarbonate resins, and hence high flowability has been desired in the polycarbonate resins. Although the high flowability can be attained by lowering the molecular weight of the polycarbonate, it will significantly reduce the obtained impact resistance. Further, poor flowability may result in generation of appearance failure in terms of gloss and the like.

There have been proposed, as means to solve the above-mentioned problems, techniques to improve the balance between the flowability and the impact resistance by use of a composition in which an organosiloxane is incorporated in a glass fiber-reinforced polycarbonate resin (Japanese Patent Publication No. 59(1984)-35929 and PCT Application Japanese Translation Publication No. 57(1982)-501860) or a glass fiber-reinforced copolymer of a polycarbonate and a polyorganosiloxane (Japanese Patent Laid-open Publication No. 2(1990)-173061). However, such techniques are not fully satisfactory.

### DISCLOSURE OF THE INVENTION

The present invention has been made in view of the above situation, and the object of the present invention is to provide polycarbonate resin compositions in which the flowability is improved without deteriorating the impact resistance.

The inventors of the present invention have found, through extensive studies, that the above-mentioned object can be achieved by the use of specific polycarbonate resins, and have reached the completion of the present invention.

Specifically, the gist of the present invention is as follows:

1. A polycarbonate resin composition comprising (i) 100 parts by mass of a polycarbonate resin formed of 10 to 100 percent by mass of (A) an aromatic polycarbonate having an end group indicated by a formula (1) shown below,

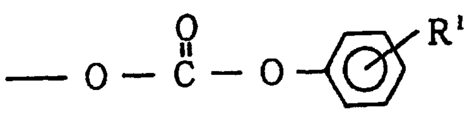 • • • (1)

(wherein $R^1$ is an alkyl group having 10 to 35 carbon atoms),
and 0 to 90 percent by mass of (B) an aromatic polycarbonate having an end group indicated by a formula (2) shown below,

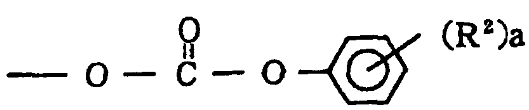 • • • (2)

(wherein $R^2$ is an alkyl group having 1 to 9 carbon atoms, an aryl group having 6 to 20 carbon atoms or a halogen atom, and a is an integer of 0 to 5); and
(ii) 5 to 150 parts by mass of (C) an inorganic filler.

2. A polycarbonate resin composition according to the above item 1, wherein $R^1$ in the formula (1) is an alkyl group

having 10 to 20 carbon atoms.

3. A polycarbonate resin composition according to the above item 1 or 2, wherein the inorganic filler (C) is glass fiber.

4. A polycarbonate resin composition according to any one of the above items 1-3, wherein $R^1$ in the formula (1) is a branched alkyl group.

5. A polycarbonate resin composition according to any one of the above items 1-4, wherein the polycarbonate resin has a viscosity-average molecular weight of 10, 000 to 40,000.

6. An office automation equipment part which is made using a polycarbonate resin composition according to any one of the above items 1-5.

7. An electric tool part which is made using a polycarbonate resin composition according to any one of the above items 1-5.

8. A camera part which is made using a polycarbonate resin composition according to any one of the above items 1-5.

## BEST MODE FOR CARRYING OUT THE INVENTION

The present invention will be described in detail hereinbelow.

First, a component (A) making up the polycarbonate resin composition of the present invention is an aromatic polycarbonate having an end group indicated by the aforementioned formula (1). In the formula (1), $R^1$ is an alkyl group having 10 to 35 carbon atoms, preferably an alkyl group having 10 to 20 carbon atoms, and more preferably an alkyl group having 21 to 35 carbon atoms, and may be of either a straight chain or a branched chain. The aromatic polycarbonate can be prepared by the common production method, that is, by reacting a dihydric phenol and a polycarbonate precursor, such as phosgene and a carbonate compound. Specifically, the aromatic polycarbonate can be prepared by, for example, reacting a dihydric phenol and a carbonate precursor, such as phosgene or by an ester exchange reaction between a dihydric phenol and a carbonate precursor, such as a diphenyl carbonate, in a solvent, such as methylene chloride in the presence of a known acid acceptor and a long chain alkyl phenol, as a terminating agent, indicated by a formula (3) shown below

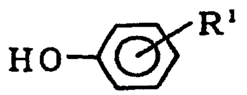 • • • (3)

(wherein $R^1$ is the same as what is described previously)
with optional addition of a branching agent.

The dihydric phenol may be of various kinds, and specifically 2, 2-bis(4-hydroxyphenyl) propane (commonly called "bisphenol A") is preferred. Examples of the dihydric phenol, other than bisphenol A, include bis(hydroxyaryl) alkanes, such as bis(4-hydroxyphenyl) methane, 1,1-bis(4-hydroxyphenyl) ethane, 2, 2-bis(4-hydroxyphenyl) butane, 2,2-bis(4-hydroxyphenyl) octane, 2,2-bis(4-hydroxy-1-methylphenyl) propane, 1,1-bis(4-hydroxy-tert-butylphenyl) propane, 2,2-bis(4-hydroxy-3-bromophenyl) propane, 2,2-bis(4-hydroxy-3,5-tetrametbylphenyl) propane, 2,2-bis(4-hydroxy-3-chlorophenyl) propane, 2,2-bis(4-hydroxy-3,5-tetrachlorophenyl) propane and 2,2-bis(4-hydroxy-3,5-tetrabromophenyl) propane; bis(hydroxyaryl) aryl alkanes, such as 2,2-bis(4-hydroxyphenyl) phenyl methane and bis(4-hydroxypheny]) naphtyl methane; bis(hydroxyaryl) cycloalkanes. such as 1,1-bis(4-hydroxyphenyl) cyclopentane, 1.1-bis (4-hydroxyphenyl) cyclohexane and 1,1-bis(4-hydroxyphenyl)-3.5.5-trimethyl cyclohexane; dihydroxy aryl ethers, such as 4,4'-dihydroxy phenyl ether and 4,4'-dihydroxy-3,3'-dimethyl phenyl ether; dihydroxy diaryl sulfides, such as 4,4'-dihydroxy diphenyl sulfide and 4,4'-dihyroxy-3,3'-dimethyl diphenyl sulfide; dihydroxy diaryl sulfoxides, such as 4,4'-dihydroxy diphenyl sulfoxide and 4,4'-dihydroxy-3,3'-dimethyl diphenyl sulfoxide; dihydroxy diaryl sulfones, such as 4,4'-dihydroxy diphenyl sulfone and 4,4'-dihydroxy-3,3'-dimethyl diphenyl sulfone; and dihydroxy diphenyls, such as 4,4'-dihydroxy diphenyl. Such dihydric phenols may be used alone or in combination of two or more kinds.

Examples of the carbonate compound include diaryl carbonates, such as diphenyl carbonate, and dialkyl carbonates, such as dimethyl carbonate and diethyl carbonate.

Long chain alkyl phenols indicated by the above-identified formula (3) are used as the terminating agent, and p-alkyl phenols are preferred among them. $R^1$ in the formula (3) is an alkyl group having 10 to 35 carbon atoms, preferably an alkyl group having 10 to 20 carbon atoms, and more preferably an alkyl group having 21 to 35 carbon atoms. It is preferable that the number of carbon atoms is as large as possible within the above-mentioned ranges. If the number of carbon atoms is less than 10, the flowability of the obtained aromatic polycarbonate resin will become poor, which is not desirable. The alkyl group may be of either a straight chain or a branched chain. It is not necessary that all the dihydric phenols should be terminated, and the dihydric phenols can have residual hydroxyl groups. In this respect, it suffices that the proportion of the termination is about 60 percent or more.

As the branching agent, there can be used compounds having three or more functional groups, such as, for example, 1,1,1-tris(4-hydroxyphenyl)ethane, α,α', α "-tris(4-hydroxyphenyl)-1,3,5-triisopropyl benzene, 1-[ α -methyl-α -(4'-hydroxyphenyl)ethyl]-4-[α', α '-bis(4"-hydroxyphenyl)ethyl]benzene, phloroglucin, trimellitic acid and isatin-bis(o-cresol).

In the above-identified formula (3), the long chain alkyl phenols having 10 to 35 carbon atoms are preferably prepared in the following manner.

Phenol and an olefin having 10 to 35 carbon atoms are reacted in the presence of a sulfonic acid resin catalyst to obtain a mono alkyl phenol. In this reaction, the reaction temperature is in the range of 100°C to 150°C, and the proportions of the materials to be fed are such that 4 to 30 moles of phenol is used per one mole of the olefin.

Examples of the olefin having 10 to 35 carbon atoms include, for example, dodecene, tridecene, tetradecene, pentadecene, hexadecene, heptadecene, octadecene, nonadecene, eicosene, heneicosene, docosene, tricosene, tetracosene, pentacosene, hexacosene, heptacosene, octacosene, nonacosene and triacontene. Among them, olefins having 21 to 35 carbon atoms are preferred as the material for producing the long chain alkyl phenol having especially desirable properties. Although such olefins have many isomers, straight-chain olefins having double bonds at the ends of the molecules thereof are preferred for the present invention.

The sulfonic acid resin catalyst is used in the reaction between the phenol and the olefin as discussed hereinabove. As the sulfonic acid resin catalyst, free acid types of sulfonic acid type cation exchange resins, strong acidic polystyrene sulfonic acid type cation resins, etc. are preferred. Especially preferred are those having a Hammette acidity function (H0) of -1 to 3. Sulfonic acid resin catalysts having a Hammette acidity function of less than -1 require complicated processing in the preparation thereof, and are thus costly, which will cause the production cost to be increased. Sulfonic acid resin catalysts having a Hammette acidity function of greater than 3 have lower catalytic performance, which will cause reduction in productivity.

It is preferred, for the purpose of maintaining the reaction rate at a suitable level, that the amount of the sulfonic acid resin catalyst to be used is 0.001 part by mass or more, preferable 0.01 part by mass or more, per one part by mass of the olefin. The reaction temperature at which the phenol and the olefin are reacted is in the range of 100°C to 150°C, preferably in the range of 110°C to 140°C, more preferably in the range of 120°C to 130°C.

In the production of the alkyl phenols, the reaction is carried out at the above-mentioned relatively narrow temperature range. This is because if the reaction is carried out at temperatures below 100°C, the proportion of ethers generated will be increased and the selectivity for the alkyl phenols, which are the intended products, will accordingly be lowered. On the other hand, if the reaction is carried out at temperatures higher than 150°C, the risk of deterioration of the catalysts will increase. Thus, the reaction temperature is to be below 150°C.

In this reaction, the proportions of the materials to be fed are such that the phenol in an amount of 4 to 30 moles, preferably in an amount of 6 to 20 moles, and more preferably in an amount of 9 to 15 moles is used per one mole of the olefin having 10 to 35 carbon atoms. Conventionally, the proportions of the materials to be fed for the reaction of phenol and an olefin have been generally such that 2 to 3 moles of phenol is used per one mole of an olefin. However, if the olefin used has more than 35 carbon atoms, the proportion of a dialkyl phenol generated is increased as the reaction temperature rises, and the selectivity for the alkyl phenol, which is the intended product, will accordingly be lowered.

Therefore, the feeding proportion of the phenol relative to one mole of the olefin should be at least 4 moles. On the other hand, the feeding proportion of the phenol relative to one mole of the olefin should not be over 30 moles, taking into consideration the volumetric efficiency of the reactors to be used for this reaction. In view of the above, in the present invention, the phenol and the olefin having 10 to 35 carbon atoms are reacted under the reaction conditions in which the reaction temperature is in the range of 100°C to 150°C and the feeding proportion of the phenol is 4 to 30 moles per one mole of the olefin, so that a monoalkyl phenol can be obtained with a high selectivity. The reaction of the phenol and the olefin may be carried out in either a batch process or a continuous process.

Second, a component (B) making up the polycarbonate resin composition of the present invention is an aromatic polycarbonate having an end group indicated by the aforementioned formula (2). This aromatic polycarbonate can be easily produced by reacting a dihydric phenol and phosgene or a carbonate compound, although there is no limitation on the way of production thereof.

Specifically, the aromatic polycarbonate is prepared by reacting a dihydric phenol and a carbonate precursor, such as phosgene or by an ester exchange reaction between a dihydric phenol and a carbonate precursor, such as a diphenyl carbonate, in a solvent, such as methylene chloride, in the presence of a catalyst, such as triethylamine and a terminating agent.

The dihydric phenols used in this case may be the same as, or different from, the above described compounds. Further, the component (B) may be either a homopolymer using a kind of the above-described dihydric phenols or a copolymer using two or more kinds of the above-described dihydric phenols. Still further, the component (B) may be a thermoplastic random branched polycarbonate obtained with a polyfunctional aromatic compound and the above-described dihydric phenol.

Examples of the carbonate compound include diaryl carbonates, such as diphenyl carbonate, and dialkyl carbonates, such as dimethyl carbonate, diethyl carbonate.

As the terminating agent, monohydric phenol compounds having a general formula (4) shown below may be used, and para-substituted compounds thereof are preferred:

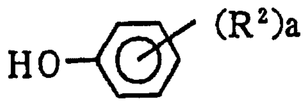 · · · (4)

(wherein $R^2$ and a are the same as those indicated previously)

Specifically, examples of the termination agent include phenol, p-cresol, p-tert-butyl phenol, p-tert-octyl phenol, p-cumyl phenol, p-nonyl phenol, p-tert-amyl phenol and the like.

The polycarbonate resin used in the polycarbonate resin composition according to the present invention is made up of the component (A) and the component (B). The proportions of the amounts of these components used are 10 to 100 percent by mass for the component (A) and 0 to 90 percent by mass for the component (B). If the proportion of the component (A) is less than 10 percent by mass, the resulting resin composition will have poor flowability, which is not desirable.

The polycarbonate resin has preferably a viscosity-average molecular weight (Mv) of 10,000 to 40,000, more preferably 12,000 to 30,000, and still more preferably 15,000 to 25,000. The use of polycarbonate resins with too low viscosity-average molecular weights may result in resin compositions having poor impact resistance, while the use of polycarbonate resins with too high viscosity-average molecular weights may result in resin compositions having poor moldability.

The inorganic filler as the component (C) to be added to the polycarbonate resin in the present invention may be of many kinds, and is used for the purpose of improving the mechanical strength and the dimensional stability of the polycarbonate resin composition and for extending purpose. As is mentioned previously, the inorganic filler is added in an amount of 5 to 150 parts by mass, and preferably 10 to 80 parts by mass, per 100 parts by mass of the polycarbonate resin. If this amount is less than 5 parts by mass, the resulting resin composition will have insufficient rigidity and thus reduced dimensional stability. On the other hand, if this amount exceeds 150 parts by mass, kneading will become difficult or impossible, which is not desirable. The use of the inorganic filler in the amount of the above-mentioned desirable range provides further improvement in the impact resistance.

Examples of the inorganic filler include potassium titanate whisker, mineral fiber (rock wool, etc.), glass fiber, carbon fiber, metal fiber (stainless steel fiber, etc.). aluminum borate whisker, silicon nitride whisker. boron fiber, tetrapod-shaped zinc oxide whisker, talc, clay, mica, pearl mica, aluminum foil, alumina, glass flakes, glass beads, glass balloons, carbon black, graphite, calcium carbonate, calcium sulfate, calcium silicate, titanium oxide, zinc oxide, silica, asbestos, quartz powder, etc. These inorganic fillers may be previously surface-treated or untreated. Examples of the surface treatment include chemical and physical surface treatments using various treatment agents, such as silane coupling agents, higher fatty acids, metal salts of fatty acids, unsaturated organic acids, organic titanates, resin acids and polyethylene glycol.

Among the above-listed inorganic fillers, glass fiber and carbon fiber are preferred.

The glass fiber may be of any glass material, such as alkali-included glass, low alkali glass and alkali-free glass. The length of the glass fiber is preferably in the range of 0.1 mm to 8 mm, and more preferably in the range of 0.3 mm to 6 mm. The diameter of the glass fiber is in the range of 0.1 μ m to 30 μ m, and preferably in the range of 0.5 μ m to 25 μ m. There is no limitation on the form of the glass fiber; the glass fiber may be of any form, such as roving, milled fiber and chopped strands. The glass fiber may be of either one kind or a combination of two or more kinds. The glass fiber is preferably surface-treated with a surface treatment agent and then subjected to sizing treatment with suitable sizing agent for the purpose of improving adhesion to the polycarbonate resins. Examples of the surface treatment agent include silane type coupling agents, such as amino silane coupling agents, epoxy silane coupling agents, vinyl silane coupling agents and acrylic silane coupling agents, titanate type coupling agents, aluminum type coupling agents, chromium type coupling agents, zirconium type coupling agents, boron type coupling agents and the like. Among these coupling agents, silane type coupling agents and titanate type coupling agents are preferred, and silane type coupling agents are especially preferred. There is no limitation on the method for treating the glass fiber with the surface treatment agent, and conventionally used methods, for example, the aqueous solution method, the organic solvent method, the spray method, etc, may be used therefor. There are urethane type sizing agents, acrylic type sizing agents, acrylonitrile-styrene copolymer type sizing agents, epoxy type sizing agents, etc., and any of these types of sizing agents can be used in the present invention. There is no limitation on the method of sizing treatment of the glass fiber with the sizing agents, and conventionally used methods, for example, the immersion coating method,

the roller coating method, the blast coating method, the curtain coating method, the spray coating method, etc., may be used therefor.

The carbon fiber is generally prepared by calcining cellulose fiber, acrylic fiber, lignin, petroleum or coal specialty pitch as the material, and is of various types, such as a flameproof type, a carbonaceous type and a graphitic type. The length of the carbon fiber is generally in the range of 0.01 mm to 10 mm, and the diameter of the carbon fiber is in the range of 5μm to 15μm. There is no limitation on the form of the carbon fiber used in the present invention, and the carbon fiber may be of various forms, such as roving, milled fiber and chopped strands. The surface of the carbon fiber may be surface-treated with epoxy resin, urethane resin and the like in order to improve the affinity with respect to the polycarbonate resin.

The polycarbonate resin composition according to the present invention may optionally contain an additive or other synthetic resin, an elastomer, etc., inasmuch as they do not exercise an adversely effect on the objects of the present invention.

Examples of the additive include antioxidants, such as hindered phenols, phosphorus types (phosphites, phosphates) and amines, ultraviolet light absorbers, such as benzotriazole and benzophenone, light stabilizers, such as hindered amines, internal lubricants, such as fatty carboxylates, paraffins, silicone oil and polyethylene wax, release agents, flame retardants, flame retardant assistants, antistatic agents, colorants, etc.

Examples of the above-mentioned other synthetic resin include polyethylene, polypropylene, polystyrene, AS resin (an acrylonitrile-styrene copolymer), ABS resin (an acrylonitrile-butadiene-styrene copolymer), polymethyl methacrylate, etc. Examples of the elastomer include isobutylene-isoprene rubber, styrene-butadiene rubber, ethylene-propylene rubber, acrylic elastomers, etc.

Mixing and kneading the above-mentioned components can be done by common methods. Specifically, the mixing and kneading may be performed by methods using a ribbon blender, a drum tumbler, a Henschel mixer, a Banbury mixer, a single-screw extruder, a twin-screw extruder, a kneader, a multi-screw extruder and the like. Suitable heating temperature in the kneading is generally in the range of 240°C to 320°C.

The polycarbonate resin composition thus obtained can be molded to produce various molded parts, such as office automation equipment parts, electric tool parts and camera parts, using various known molding methods, such as the injection molding method, the blow molding method, the extrusion molding method, the compression molding method, the calender molding method and the rotational molding method.

The present invention will be explained in further detail with reference to specific production examples, embodiments and comparative examples, although it is not at all limited to such examples or embodiments.

Production Example 1

[Production of Polycarbonate Oligomer]

60 kg of bisphenol A was dissolved in 400 liters of 5 weight % aqueous sodium hydroxide solution to prepare an aqueous sodium hydroxide solution of bisphenol A.

Then, the aqueous sodium hydroxide solution of bisphenol A which was maintained at room temperature and methylene chloride were introduced into a tubular reactor, having an inner diameter of 10 mm and a length of 10 m, at flow rates of 138 liters/hour and 69 liters/hour, respectively, through an orifice plate, with a parallel flow of phosgene at a rate of 10.7 kg/hour being blown thereinto, to effect a continuous reaction for three hours. The tubular reactor used herein comprised a double-walled tube, and the discharge temperature of the reaction liquid was held at 25°C by means of cooling water flowing through a jacket portion of the tubular reactor. The pH of the discharge liquid was adjusted to be 10 to 11.

The reaction liquid thus obtained was allowed to stand, and a water phase was thereby separated and removed, so that a methylene chloride phase (220 liters) was collected to obtain a polycarbonate oligomer (at a concentration of 317 g/liter). The obtained oligomer had a polymerization degree of 2 to 4 and a chloroformate group concentration of 0.7 normal.

Production Example 2

[Production of Polycarbonate A]

10 liters of the polycarbonate oligomer obtained in Production Example 1 was placed into a vessel with a stirrer having an internal volume of 50 liters, and 136 g of p-dodecyl phenol (available from Yuka Schenectary Corp.) was dissolved therein. Then, an aqueous sodium hydroxide solution (53 g of sodium hydroxide, 1 liter of water) and 5.8 milliliters of triethyl amine were added, and the obtained mixture was stirred at 300 rpm for an hour to effect a reaction. Thereafter, with the obtained solution, a sodium hydroxide solution of bisphenol A (720 g of bisphenol; 412

g of sodium hydroxide; 5.5liters of water) were mixed, followed by addition of 8 liters of methylene chloride, and the obtained mixture was stirred at 500 rpm for an hour to effect a reaction. After the reaction was completed, 7 liters of methylene chloride and 5 liters of water were added, the obtained mixture was stirred at 500 rpm for 10 minutes and allowed to stand after stopping the stirring, and an organic phase and a water phase were separated. The obtained organic phase was washed with 5 liters of an alkali (0.03 normal NaOH), 5 liters of an acid (0.2 normal hydrochloric acid) and 5 liters of water (twice) in this order. Then, the methylene chloride was evaporated to obtain a flake-shaped polymer. The obtained polymer had a proportion of termination of 99.5 % in the p-dodecyl phenoxyl groups and a viscosity-average molecular weight of 20,000.

Production Example 3

[Production of Polycarbonate B]

The same procedure as in Production Example 2 was conducted except that 77.6 g of p-tert-butyl phenol was used in place of 136 g of p-dodecyl phenol. The obtained polymer had a proportion of termination of 99.5 % in the p-tert-butyl phenoxyl groups and a viscosity-average molecular weight of 20,000.

Production Example 4

[Synthesis of Alkyl Phenol (a)]

Reaction materials and a catalyst were charged into a reactor with a baffle and a stirring vane in the charging proportions of 300 parts by mass of phenol, 105 parts by mass of a mixture of 1-eicosene, 1-docosene and 1-tetracosene (the proportions in mol % were 53.3 : 40.2 : 6.5) as an olefin (the molar ratio of the phenol/olefin was 9/1.) and 11 parts by mass of strong acidic polystyrene sulfonic acid type cation resin (Amberlyst 15 available from Rohm & Haas) as the catalyst, and were allowed to react at 120°C for three hours while being stirred.

After the reaction was completed, the obtained product was refined by vacuum distillation to obtain an alkyl phenol (a). The obtained alkyl phenol (a) had an average carbon number of 21 and was branched.

Production Example 5

[Synthesis of Alkyl Phenol (b)]

The same procedure as in Production Example 4 was conducted except that 110 parts by mass of 1-docosene alone was used as the olefin (the molar ratio of the phenol/olefin was 9/1), to thereby obtain an alkyl phenol (b). The obtained alkyl phenol (b) had a carbon number of 22 and was branched.

Production Example 6

[Production of Polycarbonate C]

The same procedure as in Production Example 2 was conducted except that 202 g of the alkyl phenol (a) obtained in Production Example 4 was used in place of 136 g of p-dodecyl phenol, to thereby obtain a polycarbonate C. The obtained polycarbonate C had a proportion of termination of 99.0 % in the alkyl phenoxyl groups and a viscosity-average molecular weight of 20,000.

Production Example 7

[Production of Polycarbonate D]

The same procedure as in Production Example 2 was conducted except that 209 g of the alkyl phenol (b) obtained in Production Example 5 was used in place of 136 g of p-dodecyl phenol, to thereby obtain a polycarbonate D. The obtained polycarbonate D had a proportion of termination of 99.0 % in the alkyl phenoxyl groups and a viscosity average molecular weight of 20,000.

Each of the viscosity-average molecular weight (Mv) values of the polycarbonates was determined by measuring the viscosity of each of the methylene chloride solutions at 20°C by means of a Ubbelohde viscometer to obtain an intrinsic viscosity [ η ] followed by the calculation using the equation shown below:

$$[\eta] = 1.23 \times 10^{-5} Mv^{0.83}$$

Examples 1-12 and Comparative Examples 1-3

2,000 ppm of carbon black (Mitsubishi Carbon Sharp 1000 available from Mitsubishi Chemical Corp.) as a colorant was added to each of the polycarbonates obtained in the Production Examples followed by addition of glass fiber (MA-409C available from Asahi Fiber Glass Corp.) in the proportion shown in Table 1. Each of the obtained mixtures was kneaded at 300°C using a vented twin-screw extruder (TEM-35B available from Toshiba Kikai K.K.) to effect pelletization. In Examples 2, 3, 6, 7, 10 and 11, and in Comparative Examples 2 and 3, 200 ppm of an antioxidant (PEP 36, a phosphorus antioxidant available from Asahi Denka Kogyou K.K.) was further incorporated. In addition, in Examples 2, 6 and 10, and in Comparative Example 3, 2,000 ppm of a release agent (SH 200 available from Toray - Dow Corning Corporation) was incorporated.

Spiral flow length values (SFL) were measured for the obtained pellets in the below-mentioned manner. Test pieces were prepared under the conditions in which the temperature of the cylinder was 300°C and the temperature of the mold was 80°C. Measurements of these test pieces were made for the glossiness (gloss) and the Izod impact strength. The results are shown in Table 1.

(1) SFL

Spiral flow length values were measured under the following conditions:
the injection pressure being 80 kg/cm$^2$ (7.84 MPa); the molding temperature being 300°C; the temperature of the mold being 80°C; and the width and the thickness being 10 mm and 3 mm, respectively.

(2) Glossiness (Gloss)

Values of specular glossiness at 60° were measured according to JIS (Japanese Industrial Standards) K 7105.

(3) Izod impact strength values

Izod impact strength values were measured according to JIS K 7110. Five runs were made, and the averages of their results are shown.

Table 1

| | Polycarbonate | | | | Glass fiber | SFL cm | Glossiness | Izod impact strength KJ/m$^2$ |
|---|---|---|---|---|---|---|---|---|
| | A Mass % | B Mass % | C Mass % | D Mass % | Addition Amount (parts by mass) | | | |
| Example 1 | 100 | 0 | 0 | 0 | 11 | 58 | 70 | 6 |
| Example 2 | 100 | 0 | 0 | 0 | 25 | 49 | 41 | 9 |
| Example 3 | 100 | 0 | 0 | 0 | 43 | 45 | 29 | 11 |
| Example 4 | 85 | 15 | 0 | 0 | 43 | 43 | 27 | 11 |
| Comparative Example 1 | 0 | 100 | 0 | 0 | 11 | 38 | 59 | 6 |
| Comparative Example 2 | 0 | 100 | 0 | 0 | 25 | 34 | 35 | 8 |
| Comparative Example 3 | 0 | 100 | 0 | 0 | 43 | 31 | 17 | 11 |
| Example 5 0 | | 0 | 100 | 0 | 11 | 72 | 76 | 6 |

Table 1 (continued)

| | Polycarbonate | | | | Glass fiber | SFL cm | Glossiness | Izod impact strength $KJ/m^2$ |
|---|---|---|---|---|---|---|---|---|
| | A Mass % | B Mass % | C Mass % | D Mass % | Addition Amount (parts by mass) | | | |
| Example 6 | 0 | 0 | 100 | 0 | 25 | 55 | 48 | 10 |
| Example 7 | 0 | 0 | 100 | 0 | 43 | 40 | 35 | 12 |
| Example 8 | 0 | 15 | 85 | 0 | 43 | 36 | 31 | 11 |
| Example 9 | 0 | 0 | 0 | 100 | 11 | 73 | 77 | 6 |
| Example 10 | 0 | 0 | 0 | 100 | 25 | 56 | 49 | 10 |
| Example 11 | 0 | 0 | 0 | 100 | 43 | 40 | 36 | 12 |
| Example 12 | 0 | 15 | 0 | 85 | 43 | 36 | 32 | 11 |

It can be understood from Table 1 that the examples exhibit superior results in terms of both flowability and glossiness as compared with the comparative examples, although there is no substantial difference in impact resistance.

INDUSTRIAL APPLICABILITY

According to the present invention, there can be provided colored polycarbonate resin compositions which have improved flowability without any deterioration of impact resistance and, especially, injection-molded products made of which have excellent gloss. Accordingly, the polycarbonate resin compositions according to the present invention can be suitably used to produce, for example, office automation equipment parts, electric tool parts, camera parts and the like.

## Claims

**1.** A polycarbonate resin composition comprising (i) 100 parts by mass of a polycarbonate resin formed of 10 to 100 percent by mass of (A) an aromatic polycarbonate having an end group indicated by a formula (1) shown below,

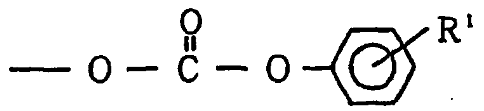

· · · (1)

(wherein $R^1$ is an alkyl group having 10 to 35 carbon atoms),
and 0 to 90 percent by mass of (B) an aromatic polycarbonate having an end group indicated by a formula (2) shown below,

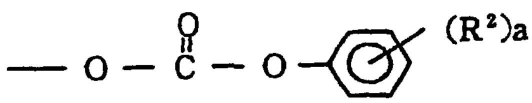

· · · (2)

(wherein $R^2$ is an alkyl group having 1 to 9 carbon atoms, an aryl group having 6 to 20 carbon atoms or a halogen atom, and a is an integer of 0 to 5); and

(ii) 5 to 150 parts by mass of (C) an inorganic filler.

**2.** A polycarbonate resin composition according to Claim 1, wherein $R^1$ in the formula (1) is an alkyl group having 10 to 20 carbon atoms.

**3.** A polycarbonate resin composition according to Claim 1, wherein the inorganic filler (C) is glass fiber.

**4.** A polycarbonate resin composition according to Claim 2, wherein the inorganic filler (C) is glass fiber.

**5.** A polycarbonate resin composition according to Claim 1, wherein $R^1$ in the formula (1) is a branched alkyl group having 10 to 35 carbon atoms.

**6.** A polycarbonate resin composition according to Claim 2, wherein $R^1$ in the formula (1) is a branched alkyl group having 10 to 20 carbon atoms.

**7.** A polycarbonate resin composition according to Claim 1, wherein the polycarbonate resin has a viscosity-average molecular weight of 10, 000 to 40,000.

**8.** A polycarbonate resin composition according to Claim 2, wherein the polycarbonate resin has a viscosity-average molecular weight of 10, 000 to 40,000.

**9.** An office automation equipment part which is made using a polycarbonate resin composition according to any one of Claims 1-8.

**10.** An electric tool part which is made using a polycarbonate resin composition according to any one of Claims 1-8.

**11.** A camera part which is made using a polycarbonate resin composition according to any one of Claims 1-8.

## INTERNATIONAL SEARCH REPORT

International application No.
PCT/JP01/00258

A. CLASSIFICATION OF SUBJECT MATTER
Int.Cl[7] C08L69/00

According to International Patent Classification (IPC) or to both national classification and IPC

B. FIELDS SEARCHED

Minimum documentation searched (classification system followed by classification symbols)
Int.Cl[7] C08L69/00, C08G64/00-64/42

Documentation searched other than minimum documentation to the extent that such documents are included in the fields searched

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X | WO, 99/36456, A1 (Mitsubishi Chemical Corporation), 22 July, 1999 (22.07.99), page 2, line 5 & JP, 11-269260, A & EP, 969031, A1 | 1-11 |
| X | JP, 63-69858, A (Mitsubishi Gas Chemical Company, Inc.), 29 March, 1988 (29.03.88), Claims; page 1, lower right column, lines 8; page 3, lower right column, line 7 (Family: none) | 1-11 |
| X | JP, 51-34992, A (Mitsubishi Gas Chemical Company, Inc.), 25 March, 1976 (25.03.76), Claims; page 2, upper right column, line 2 (Family: none) | 1-11 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 February, 2001 (16.02.01) | 06 March, 2001 (06.03.01) |
| Name and mailing address of the ISA/ Japanese Patent Office | Authorized officer |
| Facsimile No. | Telephone No. |

Form PCT/ISA/210 (second sheet) (July 1992)